# EUROPEAN PATENT APPLICATION

(11) **EP 2 778 404 A1**
(43) Date of publication of application: **17.09.2014**
(21) Application number: 13159224.8
(22) Date of filing: 14.03.2013
(51) Int. Cl.: F03D 11/00, F03D 7/02

(54) **Method to de-ice wind turbines of a wind park**

(71) Applicant: Siemens Aktiengesellschaft, 80333 München (DE)
(72) Inventor: Jensen, Dennis Soebye, 7400 Herning (DK)

(57) **Abstract**

The invention relates to a method of de-icing wind turbines of a wind park.

At least a first wind turbine (WT1) and a second wind turbine (WT3) are assigned to the wind park (WP). The first wind turbine (WT1) produces a first electrical output power (Pout1), which exceeds a first power threshold value (PTV1). The second wind turbine (WT3) produces a second electrical output power (Pout3), which falls below a second power threshold value (PTV2). The first output power (Pout1) and the second output power (Pout3) are reported to a power controller (PC)of the wind park (WP). The power controller (PC) detects that the first electrical output (Pout1) power exceeds the first power threshold value (PTV1) and the power controller (PC) detects that the second electrical output power (Pout3) falls below the second power threshold value (PTV2). The power controller (PC) initiates a de-icing procedure being executed at the second wind turbine (WT3) until the second electrical output power (Pout3) exceeds the first threshold value (PTV1).

## Description

The invention relates to a method of de-icing wind turbines of a wind park.

A wind park, which comprises a number of wind turbines, is connected with an electrical grid thus the electrical output power of the wind park is fed into the grid.

The electrical output power of the wind park might be reduced by bad weather conditions, especially by ice, which is accumulating at the rotor blades of the wind turbines of the wind park.

Several prior-art methods and procedures are known, which are used to detect the growth of ice at the rotor blades and to remove the ice if possible.

The ice-detection methods often use sensors to measure weather conditions like temperature, wind speed, wind-direction, chill-factors, moisture and the like.

The weather condition measurements are gathered and are compared with a measured power-output of a single wind turbine in view to an expected power-output production of the wind turbine.

Based on the comparison a de-icing-procedure might be initiated at the single wind turbine.

It is known to stop the wind turbine and to heat the blades until the ice is removed from the blades.

It is even known to use a pitching-algorithm to remove ice from the blades before the wind turbine is started.

The de-icing-methods described above trust into the sensors, which are used to detect the ice.

Unfortunately the sensors might be covered by ice as well, especially in rough weather conditions at offshore-sites.

The protection of sensors from bad-weather-influence while keeping their accuracy is quite expensive.

Even the use of specific designed bad-weather-approved sensors is expensive, too.

It is therefore the aim of the invention to provide an improved and reliable and cheap method for a de-icing of wind turbines of a wind park, which can be implemented quite easy.

This aim is reached by the features of claim 1. Preferred configurations are object of the dependent claims.

According to the method invented wind turbines of a wind park are de-iced by an intelligent wind park de-icing control. The wind park comprises at least a first wind turbine and a second wind turbine, which are assigned to the wind park.
The first wind turbine produces a first electrical output power, which exceeds a first power threshold value.
The second wind turbine produces a second electrical output power, which falls below a second power threshold value.

The first output power and the second output power are reported to a power controller of the wind park. This power controller is assigned to the wind park and is used to control the electrical power or output power of the whole wind park.

This power controller detects that the first electrical output power exceeds the first power threshold value and even detects that the second electrical output power falls below the second power threshold value.

The power controller initiates a de-icing procedure being executed at the second wind turbine until the second electrical output power exceeds the first threshold value.

Thus the method invented avoids the use of sensitive or expensive sensors.

The method invented is quite cheap as it utilizes the internal wind park knowledge by evaluating the output power being produced by the individual wind turbines of the wind park.

The method invented can be applied to already established wind parks as long as the assigned wind turbines are equipped with any de-icing schemes or de-icing-equipment.

The method invented allows the initiation of a de-icing process starting quite early and in a reliable manner.

In a preferred embodiment the first output power and the second output power are evaluated over a certain period of time at the power controller before the comparison and detection with the respective threshold values are done.

Thus short term deviations within the measured output-powers are equalized and the method invented is only executed if really needed.

Additionally the method invented could take the start-up phase of the wind turbines into consideration by choosing an appropriate period of time.

In a preferred embodiment the de-icing procedure consists of heating the blades while the second wind turbine stays in operational mode.

Thus the output-power production of the second wind turbine is ramped up stepwise or continuously as the de-icing is done while the wind turbine stays at work.

It has been experienced that sometimes 70% of the wind turbines of a wind park are producing an expected available power while the remaining 30% of the wind turbines of the wind park are running at a lower production in cold weather environment. Sometimes their output power is not low enough to stop the wind turbines to start an automated de-icing sequence. The method invented now allows the start of a de-icing process at wind turbines which are in operational mode, allowing the remaining 30% of the wind turbines to increase their production of available power.

In a preferred embodiment the de-icing procedure consists of heating the blades while the second wind turbine is stopped.

Thus this de-icing scheme, which might be already implemented at existing wind turbines and which is based on stopped wind turbines, is addressed by this embodiment allowing a retrofit of an existing wind park with the method invented.

In a preferred embodiment the de-icing procedure consists of a pitching algorithm being applied to the blades while the second wind turbine stays in operational mode.

Thus the output-power production of the second wind turbine is ramped up stepwise or continuously as the de-icing is done while the wind turbine stays at work.

It has been experienced that sometimes 70% of the wind turbines of a wind park are producing an expected available power while the remaining 30% of the wind turbines of the wind park are running at a lower production in cold weather environment. Sometimes their output power is not low enough to stop the wind turbines to start an automated de-icing sequence. The method invented now allows the start of a de-icing process at wind turbines which are in operational mode, allowing the remaining 30% of the wind turbines to increase their production of available power.

In a preferred embodiment the de-icing procedure consists of a pitching algorithm being applied to the blades while the second wind turbine is stopped.

Thus this de-icing scheme, which might be already implemented at existing wind turbines and which is based on stopped wind turbines, is addressed by this embodiment allowing a retrofit of an existing wind park with the method invented.

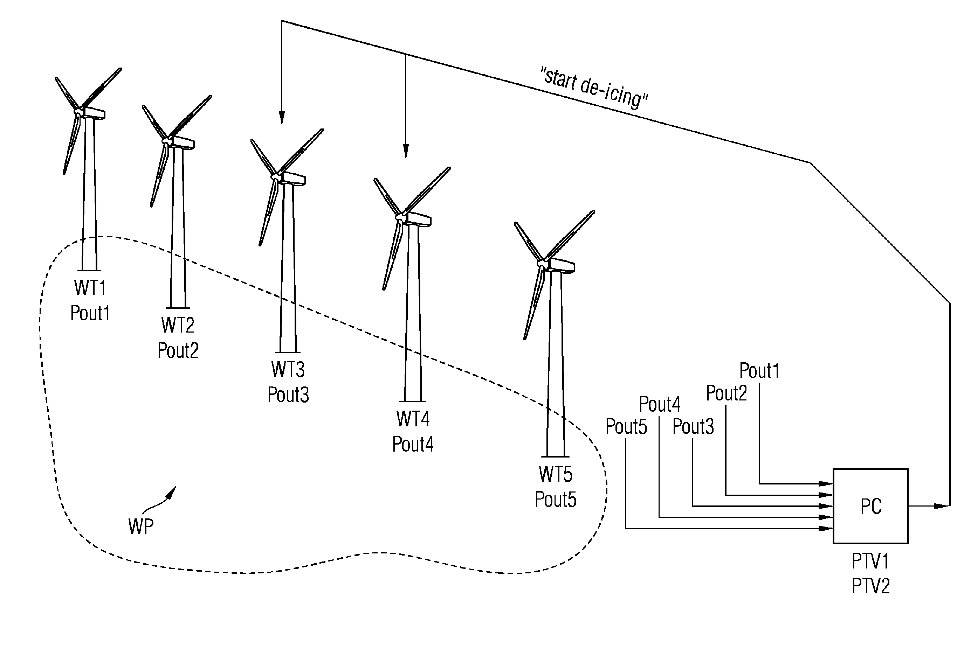

The invention is shown and explained by help of figure FIG 1.

A wind park WP comprises five wind turbines WT1, WT2, WT3, WT4 and WT5, which are assigned to the wind park WP.

The wind turbines WT1, WT2 and WT5 produce an electrical output power of Pout1=1.5 MW, Pout2=1.5 MW and of Pout5=1.5 MW.

The power value of 1.5 MW is regarded as exceeding a first power threshold value PTV1 of 1.2 MW for example.

The wind turbines WT3 and WT4 produce an electrical output power Pout3=0.6 MW and of Pout4=0.6 MW.

The power value of 0.6 MW is regarded as falling below a second power threshold value PTV2 of 0.8 MW for example.

The output powers Pout1 to Pout5 of the wind turbines WT1 to WT5 are reported to a power controller PC of the wind park WP.

This power controller PC detects that the output powers Pout1, Pout2 and Pout5 of the wind turbines WT1, WT2 and WT5 exceeds the first power threshold value PTV1.

As this is an expected output power no de-icing schemes are applied to these three wind turbines.

The power controller PC even detects that the output powers Pout3 and Pout4 of the wind turbines WT3 and WT4 falls below the second power threshold value PTV2.

The power controller PC now initiates a de-icing procedure being executed at the wind turbines WT3 and WT4 until their electrical output powers Pout3 and Pout4 even reach and finally exceed the first power threshold value PTV1.

## Claims

1. Method to de-ice wind turbines of a wind park,
- wherein at least a first wind turbine (WT1) and a second wind turbine (WT3) are assigned to the wind park (WP),
- wherein the first wind turbine (WT1) produces a first electrical output power (Pout1), which exceeds a first power threshold value (PTV1),
- wherein the second wind turbine (WT3) produces a second electrical output power (Pout3), which falls below a second power threshold value (PTV2),
- wherein the first output power (Pout1) and the second output power (Pout3) are reported to a power controller (PC)of the wind park (WP),
- wherein the power controller (PC) detects that the first electrical output (Pout1) power exceeds the first power threshold value (PTV1),
- wherein the power controller (PC) detects that the second electrical output power (Pout3) falls below the second power threshold value (PTV2), and
- wherein the power controller (PC) initiates a de-icing procedure being executed at the second wind turbine (WT3) until the second electrical output power (Pout3) exceeds the first threshold value (PTV1).

2. Method according to claim 1, wherein the first output power and the second output power are evaluated by the power controller over a certain period of time before the comparison and detection with the threshold values are done.

3. Method according to claim 1 or claim 2, wherein the de-icing procedure consists of heating the blades while the second wind turbine stays in operational mode.

4. Method according to claim 1 or claim 2, wherein the de-icing procedure consists of heating the blades while the second wind turbine is stopped.

5. Method according to claim 1 or claim 2, wherein the de-icing procedure consists of a pitching algorithm being applied to the blades while the second wind turbine stays in operational mode.

6. Method according to claim 1 or claim 2, wherein the de-icing procedure consists of a pitching algorithm being applied to the blades while the second wind turbine is stopped.
